# EUROPEAN PATENT APPLICATION

(11) **EP 4 570 051 A1**
(43) Date of publication of application: **18.06.2025**
(21) Application number: 24216574.4
(22) Date of filing: 29.11.2024
(51) Int. Cl.: A01D 34/00, A01D 34/56, A01D 34/42, A01D 34/43

(54) **WORK VEHICLE**

(30) Priority: 14.12.2023 JP 2023211025
(71) Applicant: Yanmar Holdings Co., Ltd., Osaka-shi, Osaka (JP)
(72) Inventor: KODAMA, Maroi, Okayama (JP); SUZUKI, Shogo, Okayama (JP); ISHIDA, Tomoki, Okayama (JP)
(74) Representative: Novagraaf International SA

(57) **Abstract**

[Problem] To provide an art of improving work efficiency of a grass mowing work.

[Solution] A grass mowing machine as a work vehicle includes a traveling machine body and a grass mowing device connected to the traveling machine body. The grass mowing device has a rotary mowing blade, and a rotation direction of the rotary mowing blade is automatically switched, when an advancing direction of the traveling machine body is changed.

## Description

### TECHNICAL FIELD

The present invention relates to a work vehicle.

### BACKGROUND ART

Patent Document 1 discloses a grass mowing machine including a traveling machine body and a mowing device connected to the traveling machine body. The grass mowing device includes a mowing blade, and a grass mowing work is performed by rotationally driving the mowing blade.

### PRIOR ART DOCUMENT

### PATENT DOCUMENT

Patent Document 1: Japanese Unexamined Patent Publication No. 1992-197104

### SUMMARY OF INVENTION

### TECHNICAL PROBLEM

By the way, in a grass mowing work by a rotationally driven mowing blade, a rotation direction of the mowing blade is set to a direction suitable for grass mowing in accordance with a state of grass or the like. In addition, when a grass mowing work is performed while reciprocating the grass mowing machine, it is usually desirable to rotate the mowing blade in the rotation direction suitable for the aforementioned grass mowing in both the outward path and the return path. Such a need is generated that a direction of the grass mowing machine should be reversed between the outward path and the return path, when the grass mowing is to be performed in a rotation direction suitable for the grass mowing both in the outward path and the return path in a constitution in which the mowing blade is rotated only in one direction during the work. There is a concern that such a reversing operation lowers the operation efficiency.

The present invention was made to solve the aforementioned problems, and an object of the present invention is to provide an art for improving work efficiency of the grass mowing work.

### SOLUTION TO PROBLEM

A work vehicle according to one aspect of the present invention includes a traveling machine body and a grass mowing device connected to the traveling machine body, in which the grass mowing device includes a rotary mowing blade, and a rotation direction of the rotary mowing blade is automatically switched when an advancing direction of the traveling machine body is changed.

### ADVANTAGEOUS EFFECTS OF INVENTION

According to the aforementioned configuration, the work efficiency of the grass mowing work can be improved.

### BRIEF DESCRIPTION OF DRAWINGS

FIG. 1 is a diagram illustrating a schematic configuration of a grass mowing machine that is an example of a work vehicle according to an embodiment of the present invention;
FIG. 2 is a plan view illustrating a configuration of a grass mowing device provided in the aforementioned grass mowing machine;
FIG. 3 is a plan view illustrating a configuration of a remote control device provided in the aforementioned grass mowing machine;
FIG. 4 is a block diagram schematically illustrating a configuration related to control of aforementioned grass mowing machine;
FIG. 5 is an explanatory view for explaining a rotation direction in an automatic switching mode of a rotary mowing blade provided in the aforementioned grass mowing device;
FIG. 6 is a flowchart illustrating a flow when automatic switching of the aforementioned rotation direction is started; and
FIG. 7 is a flowchart illustrating a flow of control of a rotation speed at the aforementioned automatic switching of the rotation direction.

### DESCRIPTION OF EMBODIMENTS

An embodiment of the present invention will be explained below with reference to the drawings.

### 1. Schematic Configuration of Work Vehicle

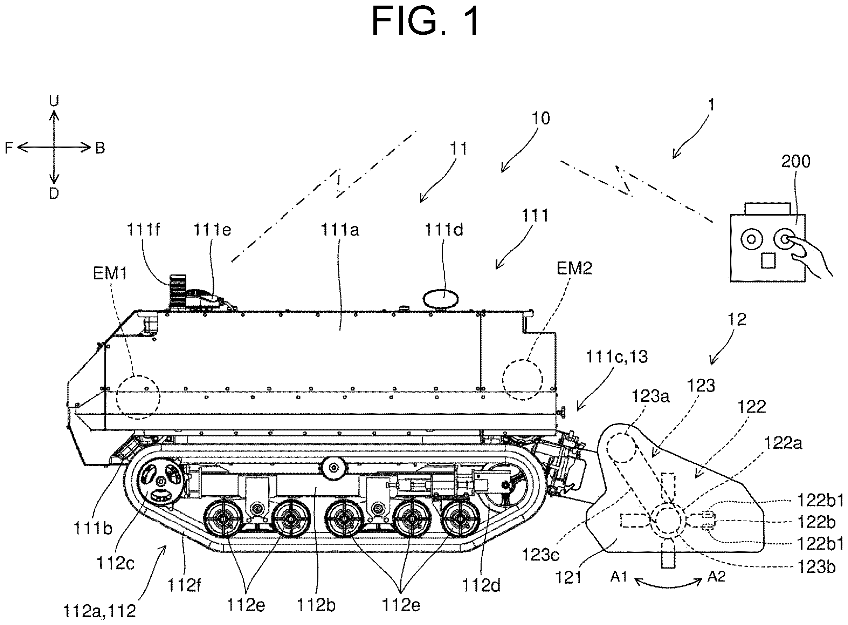

FIG. 1 is a diagram illustrating a schematic configuration of a grass mowing machine 1 as an example of a work vehicle according to an embodiment of the present invention. The grass mowing machine 1 includes a vehicle main body 10 and a remote control device 200 provided separately from the vehicle main body 10.

The remote control device 200 (also referred to as a remote manipulating device) enables an operator at a position away from the vehicle main body 10 to operate the vehicle main body 10. A configuration of the remote control device 200 will be described later.

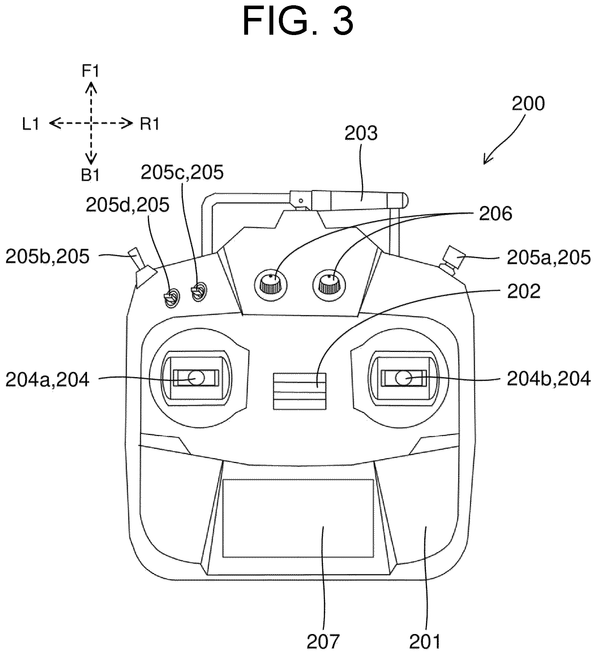

Note that, in this embodiment, the remote control device 200 is provided separately from the vehicle main body 10, but this configuration is not limiting. For example, the remote control device 200 may be provided in the vehicle main body 10 itself. In the case of such a configuration that the remote control device 200 is provided in the vehicle main body 10, for example, the shape, disposition, type and the like of an operation member (see FIG. 3), which will be described later, included in the remote control device 200 may be changed as appropriate.

The vehicle main body 10 includes a traveling machine body 11 that travels on the ground, a grass mowing device 12 (also referred to as a reaper) that performs a grass mowing work, and a hitch portion 13 that enables the grass mowing device 12 to be connected to the traveling machine body 11. That is, the grass mowing machine 1 has the traveling machine body 11, the grass mowing device 12, and the hitch portion 13.

Here, directions used in the explanation (directions related to the vehicle man body 10, in particular) are defined as follows. One side in the aforementioned one direction when the traveling machine body 11 travels straight along the one direction is referred to as a "front", and the other side as a "rear". In a direction in which the traveling machine body 11 travels straight along the one direction, a side on which the hitch portion 13 is not disposed is referred to as a "front", and a side opposite to that (the side on which the hitch portion 13 is disposed) is referred to as a "rear". In addition, a left side from the rear toward the front is defined as a "left" and a right side as a "right". Furthermore, a gravity direction perpendicular to the front-back direction and the right-left direction shall be referred to as an up-down direction with an upstream side in the gravity direction as an "upper" and a downstream side as a "lower". In the drawings, as necessary, forward shall be indicated by a symbol "F", backward by "B", rightward by "R", leftward by "L", upward by "U", and downward by "D". Note that, these directions are names used merely for the explanation and are not intended to limit actual positional relationships or directions.

The traveling machine body 11 includes a machine-body main-body portion 111 and a traveling portion 112 disposed below the machine-body main-body portion 111.

The machine-body main-body portion 111 includes an external cover 111a, a traveling drive device 111b disposed on the inner front side covered by the external cover 111a, and a PTO (Power Take Off) device 111c disposed on the inner rear side covered by the external cover 111a.

The traveling drive device 111b includes a first motor EM1 as a drive source and a power transmission mechanism (not shown) that transmits power from the first motor EM1 to the traveling portion 112. In this embodiment, the first motor EM1 is an electric motor. Note that a drive source provided in the traveling drive device 111b may be other than the electric motor and may be an engine, for example.

The PTO device 111c includes a second motor EM2 as a drive source and a first power transmission portion (not shown) capable of transmitting power from the second motor EM2 to the outside of the traveling machine-body 11. In this embodiment, the second motor EM2 is an electric motor. Note that the drive source provided in the PTO device 111c may be other than the electric motor and may be an engine, for example. In addition, in this embodiment, the first motor EM1 and the second motor EM2 are separately provided, but the electric motor (drive source) may be shared by the traveling drive device 111b and the PTO device 111c.

In addition, a battery that supplies electric power to the first motor EM1 and the second motor EM2, a power electronics device and the like are disposed inside the external cover 111a. As an example, a light 111d, a positioning antenna 111e, an alarm lamp 111f and the like are disposed outside the external cover 111a.

Note that, in this embodiment, a driver's seat for an operator is not disposed in the traveling machine body 11, that is, the vehicle main body 10 performs a grass mowing work in an unmanned manner. However, the present invention is applicable also to a grass mowing machine including the driver's seat in the traveling machine body 11. That is, the traveling machine body 11 may include equipment (a handle, a lever and the like) for an operator sitting on the driver's seat to steer the grass mowing machine.

The traveling portion 112 supports the machine-body main-body portion 111 so as to be capable of traveling. The traveling portion 112 includes a pair of right and left crawlers 112a in detail. Each of the right and left crawlers 112a includes a track frame 112b extending in the front-rear direction. Each track frame 112b is attached to a lower surface of the machine-body main-body portion 111. At a front end of the track frame 112b, a drive sprocket 112c is disposed as a drive wheel. The drive sprocket 112c transmits the power from the first motor via the aforementioned power transmission mechanism provided in the traveling drive device 111b. At a rear end of the track frame 112b, a driven sprocket 112d is disposed as a driven wheel. The driven sprocket 112d is supported by the track frame 112b, capable of rotational movement. In the track frame 112b, a plurality of rolling wheels 112e are supported capable of rotational movement between the drive sprocket 112c and the driven sprocket 112d. A crawler 112a is constituted by winding a crawler belt 112f around the drive sprocket 112c, the driven sprocket 112d, and the plurality of rolling wheels 112e.

The right and left crawlers 112a are driven by the individual first motors EM1 provided in the traveling drive device 111b. When the pair of right and left crawlers 112a are simultaneously driven in the same direction, the traveling portion 112 travels straight forward or rearward. Which of the forward and the backward is determined by a rotation direction of an output shaft of the first motor EM1. When the pair of right and left crawlers 112a are independently driven, for example, the traveling portion 112 performs turning to left or right.

Note that, in this embodiment, the crawler 112a has such a configuration that one drive wheel (drive sprocket 112c) and one driven wheel (driven sprocket 112d) are aligned in the front-rear direction, and a crawler belt 112f is wound around the drive wheel and the driven wheel, but another configuration may be used. For example, the crawler may be of such a type that the crawler belt is wound around one drive wheel and two driven wheels in a triangular shape. In addition, though the traveling portion 112 in this embodiment is a crawler type, the traveling portion may be other than the crawler type such as a wheel type, for example.

The grass mowing device 12 is disposed on the rear of the hitch portion 13. The hitch portion 13 is constituted by including the PTO device 111c. The grass mowing device 12 is attached to the traveling machine body 11 via the hitch portion 13 so as to be capable of elevating up and down. That is, the grass mowing device 12 is coupled to the traveling machine body 11 by the hitch portion 13. Note that, in this embodiment, the grass mowing device 12 is disposed behind the traveling machine body 11, but the present invention is applicable also to the grass mowing machine 1 in which the grass mowing device 12 is disposed in front of the traveling machine body 11.

In addition, the grass mowing device 12 is replaceably attached to the hitch portion 13. Thus, the grass mowing device 12 of a type different from that of the grass mowing device 12 shown in FIG. 1 can be also attached to the traveling machine body 11 via the hitch portion 13. In addition, it is possible to perform the aforementioned work by attaching an operating device (a tiller, for example), which enables a work other than the grass mowing work (tilling, for example) to the traveling machine body 11.

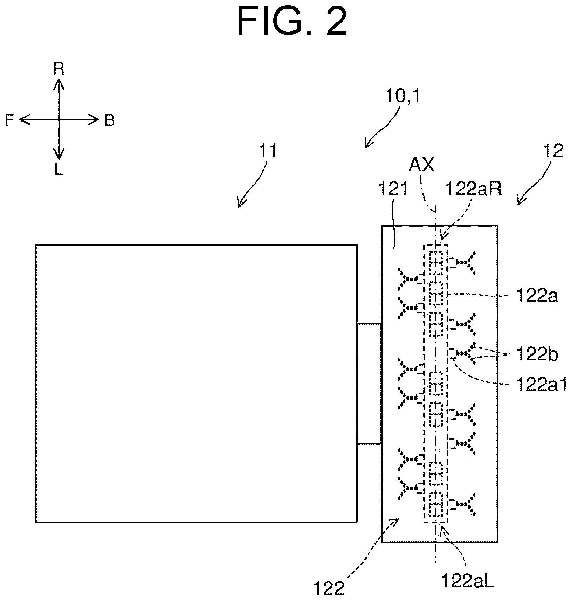

A configuration of the grass mowing device 12 will be explained with reference to FIG. 2. FIG. 2 is a plan view illustrating a configuration of the grass mowing device 12. In this embodiment, the grass mowing device 12 is a flail mower. The grass mowing device 12 has a mowing blade cover 121, a rotary mowing blade 122 disposed by being covered with the mowing blade cover 121, and a second power-transmission portion 123 capable of transmitting power to the rotary mowing blade 122.

The rotary mowing blade 122 rotates in a clockwise direction (see an arrow A1 in FIG. 1, also referred to as an A1 direction) or in a counterclockwise direction (see an arrow A2 in FIG. 1, also referred to as an A2 direction) when the grass mowing device 12 is viewed from the left side. More specifically, the rotary mowing blade 122 is configured by including a rotating shaft portion 122a and a plurality of mowing blades 122b. In particular, as shown in FIG. 2, the rotating shaft portion 122a is a shaft extending in the right-left direction. That is, the rotating shaft portion 122a is disposed with an axial direction along the right-left direction.

In detail, in the rotating shaft portion 122a, a left-end part 122aL and a right-end part 122aR are supported capable of rotational movement by bearings (not shown) provided on a left side portion and a right side portion of the grass mowing device 12, respectively.

That is, the rotating shaft portion 122a is rotatable around the shaft AX along the right-left direction. As a result, the rotary mowing blade 122 becomes rotatable in the A1 direction or the A2 direction.

A plurality of mowing blades 122b are swingably attached to an outer peripheral surface of the rotating shaft portion 122a. Each mowing blade 122b extends outward from a center side of the rotating shaft portion 122a. A blade is formed on each end part 122b 1 on a distal end side (side opposite to the side attached to the rotating shaft portion 122a) in the rotation direction (A1 direction or A2 direction) of each mowing blade 122b. In addition, in each of the mowing blades 122b, a part where the blade is formed is obliquely bent leftward or rightward (see FIG. 2, in particular). The rotary mowing blade 122 is constituted such that the mowing blade 122b bent obliquely leftward and the mowing blade 122b bent obliquely rightward are paired and attached to each attachment portion 122a1 of the rotating shaft portion 122a.

The rotating shaft portion 122a is rotationally driven by power from the PTO device 111c transmitted by the second power-transmission portion 123. In more detail, the second power-transmission portion 123 includes a drive pulley 123a, a driven pulley 123b, and a belt 123c. The drive pulley 123a and the driven pulley 123b are connected to each other via the belt 123c. In addition, the drive pulley 123a is connected also to an input portion (not shown) included in the second power-transmission portion 123. The aforementioned input portion is connected to the PTO device 111c (the first power transmission portion, in particular). The driven pulley 123b is connected also to the left end part 122aL of the rotating shaft portion 122a.

The power from the PTO device 111c, that is, the power output from the second motor EM2 and transmitted by the first power-transmission portion is transmitted to the drive pulley 123a via the input portion. As a result, the drive pulley 123a is rotated. When the drive pulley 123a is rotated, the driven pulley 123b is rotated via the belt 123c. That is, the power is transmitted from the drive pulley 123a to the driven pulley 123b. When the driven pulley 123b is rotated, the rotating shaft portion 122a connected to the driven pulley 123b is rotated. Note that the configuration of the second power-transmission portion 123 is not limited to the above, but it may be such a configuration that includes a sprocket and a chain instead of the configuration including the pulley and the belt, for example.

When the rotating shaft portion 122a rotates, the mowing blade 122b attached to an outer peripheral surface rotationally moves around an axis AX. As described above, since the blade is formed on the mowing blade 122b, when the rotationally moving mowing blade 122b comes into contact with the grass, the grass is mown. That is, grass mowing work can be performed by the rotary mowing blade 122 that is rotated and driven.

Note that the mowing blade 122b included in the rotary mowing blade 122 is rotationally moved from the lower side to the upper side with respect to the grass located on an advancing direction side of the grass mowing work so as to mow the grass, which is referred to as an uppercut. For example, in FIG. 1, the case where the rotary mowing blade 122 is rotated in the A1 direction, while the traveling machine body 11 is moved forward is the uppercut. In addition, the case where the rotary mowing blade 122 is rotated in the A2 direction while the traveling machine body 11 is moved backward is also the uppercut. Since the grass can be mown while being raised in the uppercut, it is particularly suitable for mowing the grass falling on the ground. However, with the uppercut, the mown grass is likely to be scattered to the surroundings.

On the other hand, the mowing blade 122b included in the rotary mowing blade 122 rotationally moves from the upper side to the lower side with respect to the grass positioned in the advancing direction side of the grass mowing work so as to mow the grass, which is referred to as downcut. For example, in FIG. 1, the case where the rotary mowing blade 122 is rotated in the A2 direction while the traveling machine body 11 is moved forward is the downcut. In addition, the case where the rotary mowing blade 122 is rotated in the A1 direction while the traveling machine body 11 is moved backward is also the downcut. With the downcut, the grass is mown while the mowing blade 122b is rotationally moved from the upper side to the lower side and thus, the mown grass is less likely to scatter to the surroundings as compared with the uppercut.

That is, the uppercut and the downcut are realized by the rotation of the rotary mowing blade 122 in the A1 direction or the A2 direction. Therefore, from the viewpoint of reliably realizing the uppercut and the downcut by rotating the rotary mowing blade 122 in the A1 direction or the A2 direction, the following configuration is desirable. That is, as in this embodiment, it is desirable that the rotary mowing blade 122 includes the rotating shaft portion 122a, which is rotated around the axis AX along the right-left direction.

In addition, a plurality of kinds of modes with respect to the rotation direction are provided for the rotary mowing blade 122. In more detail, the rotary mowing blade 122 is configured to be settable to a first rotation mode, a second rotation mode, and an automatic switching mode.

The first rotation mode is such a mode that the rotary mowing blade 122 is rotated in the A1 direction regardless of the advancing direction of the traveling machine body 11 (whether the traveling machine body 11 is traveling forward or backward). Therefore, in a case where the rotary mowing blade 122 is set to the first rotation mode, for example, when the traveling machine body 11 is moved forward, the grass mowing work with the uppercut can be performed. In addition, when the traveling machine body 11 is moved backward, the grass mowing work with the downcut can be performed.

The second rotation mode is such a mode that the rotary mowing blade 122 is rotated in the A2 direction regardless of the advancing direction of the traveling machine body 11. Therefore, in a case where the rotary mowing blade 122 is set to the second rotation mode, for example, when the traveling machine body 11 is moved forward, the grass mowing work with the downcut can be performed. In addition, when the traveling machine body 11 is moved backward, the grass mowing work with the uppercut can be performed.

The automatic switching mode is such a mode that the rotation direction of the rotary mowing blade 122 is automatically switched to the A1 direction or the A2 direction in accordance with the advancing direction of the traveling machine body 11. The automatic switching mode includes an uppercut mode and a downcut mode.

The uppercut mode means a mode in which the rotation direction of the rotary mowing blade 122 is automatically switched so that the grass mowing work is performed with the uppercut all the time, whether the traveling machine body 11 moves forward or backward. The downcut mode means a mode in which the rotation direction of the rotary mowing blade 122 is automatically switched so that the grass mowing work is performed with the downcut all the time, whether the traveling machine body 11 moves forward or backward.

Note that the configuration of the rotary mowing blade 122 is not limited to the above. For example, as long as the rotary mowing blade 122 can be set to the automatic switching mode, at least one of the first rotation mode and the second rotation mode may be omitted. In addition, a mode different from any of the first rotation mode, the second rotation mode, and the automatic switching mode may be added.

### 2. Configuration of Remote Control Device

A configuration of the remote control device 200 will be explained with reference to FIG. 3. FIG. 3 is a plan view illustrating a configuration of the remote control device 200. The remote control device 200 includes a housing 201, a power switch 202, an antenna 203, an operation lever 204, an operation switch 205, an operation knob 206, and a display portion 207.

The housing 201 constitutes a main body part of the remote control device 200. The power switch 202, the antenna 203, the operation lever 204, the operation switch 205, the operation knob 206, and the display portion 207 described above are mounted on appropriate spots of the housing 201, respectively. Note that the disposition shown in FIG. 3 is only exemplification and may be changed appropriately.

The power switch 202 is provided at the center part of a front surface of the housing 201 and enables turning on / off of the power of the remote control device 200. The power switch 202 is a seesaw switch, for example. Note that the power source of the remote control device 200 is a battery, a dry cell or the like disposed in the housing 201, for example.

The antenna 203 is provided by protruding from a side surface (side surface on an upper side in FIG. 3) of the housing 201 and enables wireless communication with the traveling machine body 11. When the power source of the remote control device 200 is in an on state by the power switch 202, the remote control device 200 can perform wireless communication with the traveling machine body 11. When the power of the remote control device 200 is in an off state by the power switch 202, the remote control device 200 cannot perform communication with the traveling machine body 11. In this embodiment, when the traveling machine body 11 cannot communicate with the remote control device 200 any more, the traveling machine body 11 automatically stops traveling. That is, the power switch 202 has a function as an emergency stop switch of the traveling machine body 11.

Note that an emergency stop switch may be provided separately from the power switch 202.

The operation lever 204 enables the traveling operation of the traveling machine body 11 and the operation of the grass mowing device 12.

The operation lever 204 includes a first operation lever 204a and a second operation lever 204b disposed laterally side by side with the power switch 202 interposed therebetween. The first operation lever 204a (the left-side lever shown in FIG. 3) can be pulled down at least in two directions (F1-B1 direction and L1-R1 direction) orthogonal to each other, which are indicated by broken arrows in FIG. 3. In addition, it is also possible to bring it down to either one side in the F1-B1 direction or to pull it down to either one side in the L1-R1 direction. Note that the second operation lever 204b (the right-side lever shown in FIG. 3) can also be pulled down in the same direction as the first operation lever 204a.

By pulling down the first operation lever 204a in the F1 direction, the traveling machine body 11 can be moved forward. By pulling down the first operation lever 204a in the B1 direction, the traveling machine body 11 can be moved backward. By pulling down the first operation lever 204a in the L1 direction, the traveling machine body 11 can be turned to the left. By pulling down the first operation lever 204a in the R1 direction, the traveling machine body 11 can be turned to the right. That is, the advancing direction of the traveling machine body 11 can be changed by operating the first operation lever 204a of the remote control device 200. Thus, even when a distance between the operator and the traveling machine body 11 is sufficiently ensured, the traveling machine body 11 can be operated. Therefore, from the viewpoint of improving safety when the traveling machine body 11 is operated, it is desirable that the grass mowing machine 1 includes the remote control device 200 capable of changing the advancing direction of the traveling machine body 11 as in this embodiment.

By pulling down the second operation lever 204b in the F1 direction, the grass mowing device 12 can be raised. By pulling down the second operation lever 204b in the B1 direction, the grass mowing device 12 can be lowered. By pulling down the second operation lever 204b in the L1 direction, the traveling machine body 11 can be turned to the left. By pulling down the second operation lever 204b in the R1 direction, the traveling machine body 11 can be turned to the right.

Note that a turning radius when the operation is performed with the same operation amount (operation amount from a neutral position) is different between the turning by the first operation lever 204a (left turning, right turning) and the turning by the second operation lever 204b (left turning, right turning). In more detail, when the first operation lever 204a and the second operation lever 204b are pulled down by the same amount from the neutral position, the traveling machine body 11 can be turned with a larger turning radius when operated by the second operation lever 204b than when operated by the first operation lever 204a. That is, the traveling machine body 11 can be gently turned by the second operation lever 204b.

The operation switch 205 includes a first operation switch 205a, a second operation switch 205b, a third operation switch 205c, and a fourth operation switch 205d.

The first operation switch 205a is disposed on a side surface (a side surface on an upper right side in FIG. 3) of the housing 201. The first operation switch 205a is, for example, a momentary switch that can be pressed down. The first operation switch 205a is used when the grass mowing machine 1 is configured capable of automated traveling. The aforementioned automated travel means that, in the grass mowing machine 1, at least steering is autonomously (in an automated manner) performed so as to follow a route specified in advance. The automated traveling may be configured to autonomously perform, in addition to the steering, at least either one of traveling speed control and a work by the grass mowing device 12, for example. If the grass mowing machine 1 is capable of the automatic traveling, the first operation switch 205a enables a plurality of types of settings related to the automatic traveling. The aforementioned plurality of types of settings include, for example, a start setting and an end setting of the automated traveling.

The second operation switch 205b is disposed on a side surface of the housing 201 (a side surface on an upper left side in FIG. 3), and is made switchable between a state in which power transmission from the PTO device 111c to the grass mowing device 12 is enabled and a state in which the power transmission is disabled. The second operation switch 205b is a toggle switch, for example.

The third operation switch 205c is disposed on a front surface of the housing 201 (the upper left side of the front surface in FIG. 3). The third operation switch 205c is, for example, an alternate-type toggle switch that can be switched to three positions. That is, the third operation switch 205c can be switched to an F1 position (a position pulled down to the F1 direction), a B1 position (a position pulled down to the B1 direction), and a neutral position (a position facing a direction orthogonal to the front surface of the housing 201).

The third operation switch 205c enables setting related to the rotation direction of the rotary mowing blade 122.

For example, by switching the third operation switch 205c to the F1 position (pulled down to the F1 direction), the rotary mowing blade 122 is set to the first rotation mode. By switching the third operation switch 205c to the B1 position (pulled down to the B1 direction), the rotary mowing blade 122 is set to the second rotation mode. By switching the third operation switch 205c to the neutral position, the rotary mowing blade 122 is set to the automatic switching mode.

The fourth operation switch 205d is disposed adjacent to the third operation switch 205c (on the left in FIG. 3). The fourth operation switch 205d is, for example, an alternate-type toggle switch that can be switched to two positions. The fourth operation switch 205d also enables setting related to the rotation direction of the rotary mowing blade 122. By switching the fourth operation switch 205d to the F1 position, for example, the automatic switching mode is set to the uppercut mode. By switching the fourth operation switch 205d to the B1 position, the automatic switching mode is set to the downcut mode.

The operation knob 206 is disposed on the front surface (the upper side of the front surface in FIG. 3) of the housing 201 and enables adjustment of a maximum speed of the traveling machine body 11. In more detail, two operation knobs 206 are provided. One of the two operation knobs 206 enables adjustment of the maximum speed of the traveling machine body 11 at the time of traveling straight. The other of the two operation knobs 206 enables adjustment of the maximum speed of the traveling machine body 11 at the time of turning travel.

The display portion 207 is disposed on the front surface (the lower side of the front surface in FIG. 3) of the housing 201 and displays various kinds of information to be notified to the operator. The various kinds of information include display of the traveling speed of the traveling machine body 11, for example. The display portion 207 is, for example, a liquid-crystal display device, an organic EL display device and the like.

### 3. Configuration Related to Control

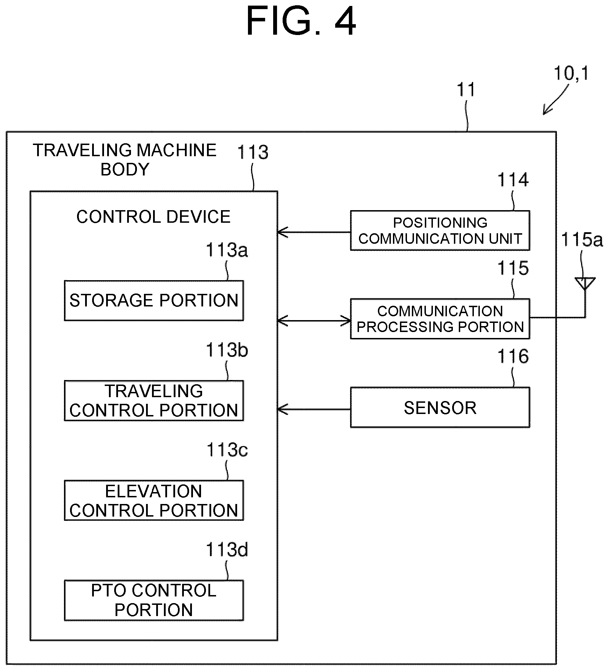

A configuration related to the control of the grass mowing machine 1 will be explained on the basis of FIG. 4. FIG. 4 is a block diagram schematically illustrating the configuration related to the control of the grass mowing machine 1. Note that, in FIG. 4, constituent elements required to explain features of this embodiment are shown, and description on general constituent elements is omitted.

The grass mowing machine 1 includes a control device 113. The control device 113 is, for example, a computer device constituted by including an arithmetic device, an input/output portion and a storage portion 113a. The arithmetic device is, for example, a processor or a microprocessor. The storage portion 113a is a main storage device such as a ROM (Read Only Memory), a RAM (Random Access Memory) and the like. The storage portion 113a may further include an auxiliary storage device such as an HDD (Hard Disk Drive) or an SSD (Solid State Drive). Various kinds of programs, data and the like are stored in the storage portion 113a. The arithmetic device reads out the various types of programs from the storage portion 113a and executes arithmetic processing according to the programs. The program stored in the storage portion 113a may be provided by, for example, computer-readable nonvolatile recording media. As another example, the program may be provided from a program providing server via a communication line such as the Internet.

The control device 113 can be operated as a traveling control portion 113b, an elevation control portion 113c, and a PTO control portion 113d by cooperation of the aforementioned hardware and software. The control device 113 may be configured of a single piece of hardware or may be configured of a plurality of pieces of hardware that can communicate with each other.

Note that each of the functional portions 113b to 113d included in the control device 113 may be realized by causing an arithmetic device to execute arithmetic processing according to a program, that is, by software, as described above but may be also realized by another method. At least any one of the functional portions 113b to 113d may be realized by using an Application Specific Integrated Circuit (ASIC), a Field Programmable Gate Array (FPGA) or the like, for example. That is, at least any one of the functional portions 113b to 113d may be realized by hardware by using a dedicated IC or the like. In addition, at least any one of the functional portions 113b to 113d may be realized by using the software and the hardware simultaneously. In addition, each of the functional portions 113b to 113d is a conceptual configuration. Therefore, a function executed by one constituent element may be distributed to a plurality of constituent elements, or functions of a plurality of constituent elements may be integrated into one constituent element.

The traveling control portion 113b controls the traveling drive device 111b (see FIG. 1) on the basis of a traveling instruction from the remote control device 200 (for example, a forward traveling instruction by the first operation lever 204a).

The elevation control portion 113c adjusts an elevation position (height from the ground) of the grass mowing device 12 on the basis of an elevation instruction from the remote control device 200 (for example, an upward-elevation instruction by the second operation lever 204b).

The PTO control portion 113d controls the PTO device 111c (see FIG. 1) on the basis of a switching instruction (for example, a transmission instruction by the second operation switch 205b) from the remote control device 200 so as to switch the power transmission to the grass mowing device 12. In addition, the PTO control portion 113d performs setting related to the rotation direction of the rotary mowing blade 122 on the basis of a setting instruction from the remote control device 200 (for example, an instruction of mode setting by the third operation switch 205c). That is, the PTO control portion 113d sets the rotary mowing blade 122 to any one of the first rotation mode, the second rotation mode, and the automatic switching mode. Furthermore, the PTO control portion 113d controls the PTO device 111c on the basis of the setting related to the aforementioned rotation direction and controls the rotation direction of the power (rotation power) transmitted to the grass mowing device 12.

The PTO control portion 113d adjusts the rotation speed of the rotary mowing blade 122 by controlling the PTO device 111c, in addition to the aforementioned functions. For example, the PTO control portion 113d controls the PTO device 111c such that the rotary mowing blade 122 rotates at a rated rotation speed except when the rotation direction of the rotary mowing blade 122 is automatically switched. The automatic switching of the rotation direction of the rotary mowing blade 122 will be described later.

A positioning communication unit 114, a communication processing portion 115, and a sensor 116 are connected to the control device 113. That is, the grass mowing machine 1 includes the positioning communication unit 114, the communication processing portion 115, and the sensor 116.

The positioning communication unit 114 includes a positioning antenna 111e (see FIG. 1) and acquires the position of the vehicle main body 10 as information on latitudes and longitudes, for example, by using a positioning signal received by the positioning antenna 111e from a positioning satellite. The positioning communication unit 114, after reception of a positioning signal from a reference station by an appropriate method, not shown, for example, the positioning communication unit 114 performs the positioning by using a publicly-known Real Time Kinematic GNSS (RTK-GNSS) method. The positioning communication unit 114 outputs the position information of the vehicle main body 10 to the control device 113. Note that the positioning communication unit 114 may perform positioning by using other methods such as Differential GNSS (DGNSS) method, for example. In addition, the grass mowing machine 1 may be configured to include a quantum compass capable of positioning, for example, instead of or in addition to the positioning communication unit 114.

The communication processing portion 115 communicates with the remote control device 200 via the communication antenna 115a. The communication antenna 115a is an antenna for performing wireless communication with the remote control device 200. For wireless communication, wireless Local Area Network (LAN) such as Wi-Fi (registered trademark) may be used.

The sensor 116 detects information related to the vehicle main body 10 and outputs the detected information to the control device 113. In this embodiment, the sensor 116 includes a plurality of types of sensors. Each of the plurality of types of sensors is connected to the control device 113 capable of inputting a signal. The plurality of types of sensors include, for example, an inertial measurement device, an obstacle sensor, a car speed sensor, an elevation position sensor and the like.

The inertial measurement device includes a 3-axis angular-velocity sensor and a 3-direction acceleration sensor and can measure an attitude of the traveling machine body 11. The obstacle sensor is a sensor that detects an obstacle around the vehicle main body 10 and may be, for example, an ultrasonic sensor, a camera, a radar, or Light Detection And Ranging (LiDAR). The car speed sensor is a sensor that detects a car speed of the traveling machine body 11. The elevation position sensor is a sensor that detects an elevation position of the grass mowing device 12.

Note that the positioning communication unit 114 and some of the sensors 116 (for example, an inertial measurement device) are used when the grass mowing machine 1 travels automatedly. That is, since the grass mowing machine 1 travels on the basis of an instruction from the remote control device 200, the positioning communication unit 114 and some of the sensors 116 are not indispensable.

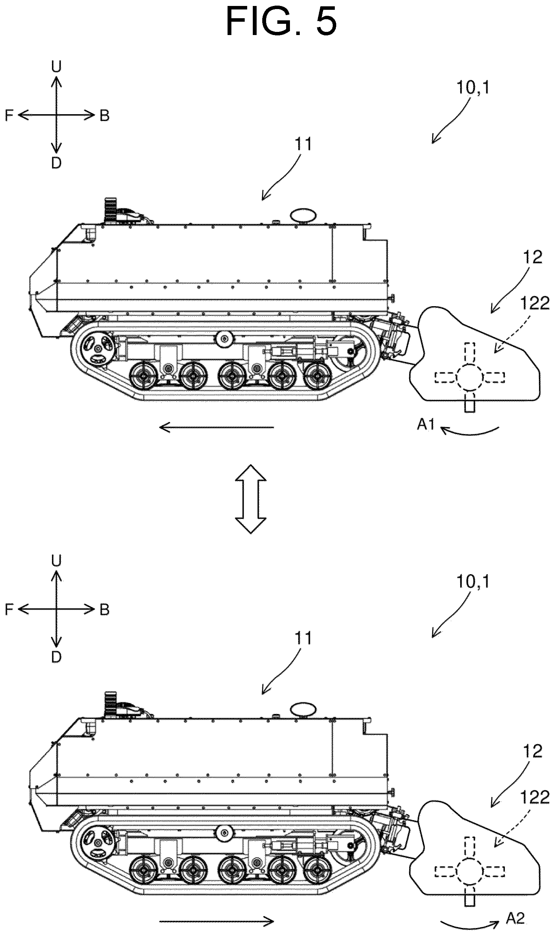

4. Automatic Switching of Rotation Direction in Rotary Mowing Blade Automatic switching of the rotation direction of the rotary mowing blade 122 will be explained. As described above, the automatic switching of the rotation direction is performed in the automatic switching mode. First, the rotation direction of the rotary mowing blade 122 in the automatic switching mode will be explained on the basis of FIG. 5. FIG. 5 is an explanatory view illustrating the rotation direction of the rotary mowing blade 122 in the automatic switching mode. FIG. 5 illustrates a case where the automatic switching mode is set to the uppercut mode.

As shown in a drawing on the upper side in FIG. 5, in a case where the rotary mowing blade 122 is set to the uppercut mode in the automatic switching mode, when the traveling machine body 11 is moved forward, the rotary mowing blade 122 is rotated in the A1 direction. That is, the grass mowing work with the uppercut is performed while the traveling machine body 11 is moved forward. As shown in a drawing on the lower side in FIG. 5, when the traveling machine body 11 is moved backward, the rotary mowing blade 122 is rotated in the A2 direction. That is, the grass mowing work with the uppercut is performed while the traveling machine body 11 is moved backward. Therefore, when the rotary mowing blade 122 is set to the uppercut mode, it is possible to perform the grass mowing work with the uppercut all the time whether the traveling machine body 11 is moved forward or backward.

Note that, when the rotary mowing blade 122 is set to the downcut mode, the grass mowing work can be performed with the downcut all the time whether the traveling machine body 11 is moved forward or backward. In more detail, when the rotary mowing blade 122 is set to the downcut mode, the rotary mowing blade 122 rotates in a direction opposite to the direction when it is set to the uppercut mode. That is, when the traveling machine body 11 is moved forward, the rotary mowing blade 122 is rotated in the A2 direction, and when the traveling machine body 11 is moved backward, the rotary mowing blade 122 is rotated in the A1 direction.

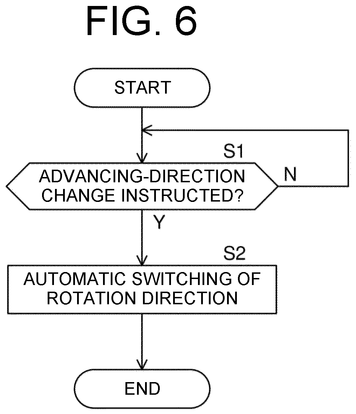

Subsequently, a flow when the automatic switching of the rotation direction is started will be explained on the basis of FIG. 6. FIG. 6 is a flowchart illustrating the flow when the automatic switching of the rotation direction is started. The flowchart shown in FIG. 6 is started, for example, at a timing when the control device 113 (see FIG. 4) recognizes the start of the grass mowing work by the grass mowing machine 1. The start of the grass mowing work may be at the same timing as the start of the operation of the grass mowing device 12, for example. In this case, the flowchart shown in FIG. 6 is started at the timing when the control device 113 gives an instruction to start the operation of the grass mowing device 12.

At Step S1, the PTO control portion 113d (see FIG. 4) determines whether or not a change instruction of the advancing direction of the traveling machine body 11 was given. In this embodiment, the aforementioned change instruction is realized by the operator switching the first operation lever 204a from either one of the sides to the other side in the F1-B1 direction (see FIG. 3). For example, the change instruction is realized by switching the first operation lever 204a from the F1 direction to the B1 direction. In this case, the traveling machine body 11 is switched from forward traveling to backward traveling. That is, the change instruction in this embodiment is an instruction to change the advancing direction of the traveling machine body 11 from one side to the other side in the front-rear direction (for example, from the front to the rear). In the case where a change instruction was given (Yes at Step S1), the processing proceeds to the subsequent Step S2. When there is no change instruction (No at Step S1), the PTO control portion 113d continues determination of the change instruction.

Note that the change instruction is not limited to the above. For example, when the grass mowing machine 1 is configured capable of automated traveling, the change instruction may be as follows. That is, in the automated traveling, an instruction to switch from a route on which the grass mowing machine 1 is automatedly traveling to a route (for example, an adjacent route) different from the aforementioned route may be set as the change instruction.

At Step S2, the PTO control portion 113d executes processing of automatically switching the rotation direction of the rotary mowing blade 122. In more detail, the PTO control portion 113d controls the second motor EM2 (see FIG. 1) of the PTO device 111c to reverse the rotation direction of the output shaft of the second motor EM2. As described above, the power from the second motor EM2 is transmitted to the rotating shaft portion 122a of the rotary mowing blade 122 via the first power transmission portion of the PTO device 111c and the second power-transmission portion 123 of the grass mowing device 12 (see FIG. 1). Thus, when the rotation direction of the output shaft of the second motor EM2 is reversed, the rotation direction of the rotating shaft portion 122a is also reversed. That is, the rotation direction of the rotary mowing blade 122 is also reversed. Therefore, when the advancing direction of the traveling machine body 11 is changed, the rotation direction of the rotating shaft portion 122a, that is, the rotation direction of the rotary mowing blade 122 is automatically switched without an operation by the operator of the remote control device 200 or the like.

According to the aforementioned configuration, the rotation direction of the rotary mowing blade 122 is automatically switched by changing the advancing direction of the traveling machine body 11. Thus, the rotary mowing blade 122 can be rotated in the rotation direction suitable for mowing without reversing the direction of the traveling machine body 11, and the work efficiency of the grass mowing work can be improved.

In addition, from the viewpoint of reliably realizing a configuration in which the rotary mowing blade 122 is rotated in a rotation direction suitable for mowing, the following configuration is desirable. That is, as in this embodiment, in a configuration in which the rotary mowing blade 122 includes the rotating shaft portion 122a, it is desirable that the rotation direction of the rotating shaft portion 122a is switched in accordance with a change in the advancing direction of the traveling machine body 11.

In particular, in the grass mowing work performed while reciprocating the traveling machine body 11, it is possible to rotate the rotary mowing blade 122 in a rotation direction suitable for mowing in both the forward path and the backward path without reversing the direction of the traveling machine body 11. Therefore, the following configuration is desirable from the viewpoint of improving the work efficiency in the grass mowing work involving reciprocation of the traveling machine body 11. That is, as in this embodiment, when the advancing direction of the traveling machine body 11 is changed from one side to the other side in the front-rear direction, it is desirable that the rotation direction of the rotary mowing blade 122 is reversed.

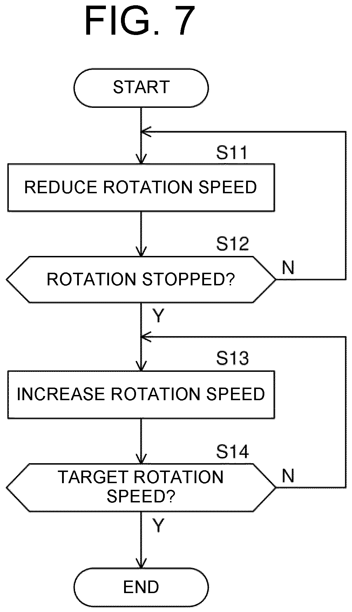

Note that when the rotation direction of the rotary mowing blade 122 is automatically switched, the rotation speed of the rotary mowing blade 122 is gradually reduced in the rotation direction before the switching and is stopped. After the stop, the rotation speed of the rotary mowing blade 122 is gradually increased in the rotation direction after the switching. More details are as follows. FIG. 7 is a flowchart illustrating a flow of control of a rotation speed at the automatic switching of the rotation direction. The flowchart shown in FIG. 7 is started, for example, at a timing when the aforementioned change instruction was given.

At Step S11, the PTO control portion 113d controls the PTO device 111c so as to reduce the rotation speed of the rotary mowing blade 122. For example, the PTO control portion 113d lowers (slightly reduces) a control current to be output to the PTO device 111c by a predetermined amount at predetermined time intervals. As a result, the rotation speed of the rotary mowing blade 122 gradually decreases. When the rotation speed lowers, the processing proceeds to the subsequent Step S12.

At Step S12, the PTO control portion 113d determines whether or not the rotary mowing blade 122 has stopped. In this embodiment, whether or not the rotary mowing blade 122 has stopped is determined on the basis of the rotation speed of the output shaft of the second motor EM2 (see FIG. 1). The rotation speed of the output shaft of the second motor EM2 is detected by a rotation speed sensor (not shown) provided in the PTO device 111c. The aforementioned rotation speed sensor is connected to the control device 113 (see FIG. 4) so as to be capable of inputting a signal.

Note that the determination on whether or not the rotary mowing blade 122 has stopped is not limited to the above. For example, the determination on stop of the rotary mowing blade 122 may be made on the basis of the rotation speed of the rotary mowing blade 122 (the rotating shaft portion 122a) itself. That is, the grass mowing device 12 may be configured such that a rotation speed sensor is provided so as to detect the rotation speed of the rotary mowing blade 122.

When the rotary mowing blade 122 is rotating (No at Step S12), the processing is returned to Step S11. Therefore, the processing at Step S11 and Step S12 is repeated until the rotation of the rotary mowing blade 122 is stopped. In other words, the rotation speed of the rotary mowing blade 122 gradually lowers until the rotation of the rotary mowing blade 122 stops. When the rotation of the rotary mowing blade 122 is stopped (Yes at Step S12), the processing proceeds to the subsequent Step S13.

At Step S13, the PTO control portion 113d controls the PTO device 111c so as to increase the rotation speed of the rotary mowing blade 122. For example, the PTO control portion 113d raises (slightly increases) a control current to be output to the PTO device 111c by a predetermined amount at predetermined time intervals. As a result, the rotation speed of the rotary mowing blade 122 gradually increases. Note that, at this time, the PTO control portion 113d controls the PTO device 111c so that the rotation direction of the rotary mowing blade 122 is opposite to the direction before the rotation is stopped (Step S11, Step S12). When the rotation speed increases, the processing proceeds to the subsequent Step S14.

At Step S14, the PTO control portion 113d determines whether or not the rotation speed of the rotary mowing blade 122 has reached the target rotation speed. In this embodiment, the target rotation speed described above is the same as the rotation speed at the time when the automatic switching of the rotation direction is started. Note that the target rotation speed is not limited to the above, and may be different from the rotation speed at the time when the automatic switching is started.

When the rotation speed has not reached the target rotation speed (No at Step S14), the processing is returned to Step S13. Therefore, the processing at Step S13 and Step S14 is repeated until the rotation speed reaches the target rotation speed. That is, the rotation speed of the rotary mowing blade 122 gradually increases after the rotation of the rotary mowing blade 122 is stopped and reaches the target rotation speed in the end. When the rotation speed has reached the target rotation speed (Yes at Step S14), the automatic switching of the rotation direction is completed.

When the automatic switching of the rotation direction is smoothly performed, it is possible to avoid damage to a member (for example, the PTO device 111c or the second power-transmission portion 123) directly or indirectly connected to the rotary mowing blade 122. From this point of view, as shown in FIG. 7, at the time of automatic switching of the rotation direction of the rotary mowing blade 122, it is desirable that the grass mowing machine 1 gradually decreases the rotation speed of the rotary mowing blade 122 so as to stop the rotary mowing blade 122. Then, after the rotary mowing blade 122 is stopped, it is desirable that the rotation speed is gradually increased to the target rotation speed.

### 5. Supplementary Notes

The grass mowing machine 1 explained in this embodiment can also be expressed as a work vehicle as illustrated in the following Supplementary Notes.

A work vehicle in Supplementary Note (1) includes
a traveling machine body and
a grass mowing device connected to the traveling machine body, in which
the grass mowing device has a rotary mowing blade, and
a rotation direction of the rotary mowing blade is automatically switched, when an advancing direction of the traveling machine body is changed.

The work vehicle in Supplementary Note (2) is configured such that, in the work vehicle described in Supplementary Note (1),
the rotation direction of the rotary mowing blade is reversed, when the advancing direction of the traveling machine body is changed from one side to the other side in a front-rear direction of the traveling machine body.

The work vehicle in Supplementary Note (3) is configured such that, in the work vehicle described in Supplementary Note (1) or (2),
at a time when the rotation direction of the rotary mowing blade is switched,
a rotation speed of the rotary mowing blade is gradually lowered and the rotary mowing blade is stopped, and
after the rotary mowing blade is stopped, the rotation speed of the rotary mowing blade is gradually increased to a target rotation speed.

The work vehicle in Supplementary Note (4) is configured such that, in the work vehicle described in any one of Supplementary Notes (1) to (3),
the rotary mowing blade includes a rotating shaft portion that rotates around a shaft extending along a right-left direction of the traveling machine body, and
as the advancing direction of the traveling machine body is changed, the rotation direction of the rotating shaft portion is switched.

The work vehicle in Supplementary Note (5) includes, in the work vehicle described in any one of Supplementary Notes (1) to (4),
a remote control device capable of changing the advancing direction of the traveling machine body.

Although the embodiments of the present invention have been described above, the scope of the present invention is not limited thereto, and the present invention can be implemented by being expanded or changed without departing from the gist of the invention. In addition, the plurality of embodiments and variations described in this specification may be embodied in combination to the extent possible.

### INDUSTRIAL APPLICABILITY

The present invention is applicable to a work vehicle such as an agricultural machine, a construction machine or the like.

### REFERENCE SIGNS LIST

1 Grass mowing machine (work vehicle)
11 Traveling machine body
12 Grass mowing device
122 Rotary mowing blade
122a Rotating shaft portion
200 Remote control device
AX Axis

## Claims

1. A work vehicle comprising:
a traveling machine body and
a grass mowing device connected to the traveling machine body, wherein
the grass mowing device has a rotary mowing blade, and
a rotation direction of the rotary mowing blade is automatically switched, when an advancing direction of the traveling machine body is changed.

2. The work vehicle according to claim 1, wherein the rotation direction of the rotary mowing blade is reversed, when the advancing direction of the traveling machine body is changed from one side to the other side in a front-rear direction of the traveling machine body.

3. The work vehicle according to claim 1, wherein
at a time when the rotation direction of the rotary mowing blade is switched,
a rotation speed of the rotary mowing blade is gradually lowered and the rotary mowing blade is stopped, and
after the rotary mowing blade is stopped, the rotation speed of the rotary mowing blade is gradually increased to a target rotation speed.

4. The work vehicle according to claim 1, wherein the rotary mowing blade includes a rotating shaft portion that rotates around a shaft extending along a right-left direction of the traveling machine body, and
as the advancing direction of the traveling machine body is changed, the rotation direction of the rotating shaft portion is switched.

5. The work vehicle according to any one of claims 1 to 4, comprising a remote control device capable of changing an advancing direction of the traveling machine body.
